(19) Europäisches Patentamt
European Patent Office
Office européen des brevets

(11) EP 0 537 602 B1

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(51) Int Cl.6: **C09D 5/44**, C08G 18/76, C08G 18/80

(21) Anmeldenummer: **92117068.4**

(22) Anmeldetag: **06.10.1992**

(54) **Hitzehärtbares Überzugsmittel für die kathodische Elektrotauchlackierung**

Heat-curable coating composition for cathodic electrodeposition

Composition de revêtement thermodurcissable pour l'électrodéposition cathodique

(84) Benannte Vertragsstaaten:
**AT BE CH DE DK ES FR GB IT LI NL PT SE**

(30) Priorität: **17.10.1991 DE 4134302**

(43) Veröffentlichungstag der Anmeldung:
**21.04.1993 Patentblatt 1993/16**

(73) Patentinhaber: **BASF Coatings Aktiengesellschaft
48165 Münster (DE)**

(72) Erfinder:
- **Hoffmann, Gerhard, Dr.
W-6701 Otterstadt (DE)**
- **Faul, Dieter, Dr.
W-6702 Bad Duerkheim (DE)**
- **Huemke, Klaus, Dr.
W-6701 Friedelsheim (DE)**
- **Gilbert, John A., Dr.
Beverly hills, MI.48025 (US)**

(56) Entgegenhaltungen:
**EP-A- 0 192 113**
**EP-A- 0 236 050**
**EP-A- 0 380 009**
**US-A- 4 296 010**
**US-A- 4 504 606**

- **DATABASE WPIL Section Ch, Week 8427, 29. August 1984 Derwent Publications Ltd., London, GB; AN 84-168737**
- **Polyurethane, Kunststoff Handbuch 7, Carl Hanser Verlag München Wien, 1983, Seite 81.**
- **Organikum, 13. Auflage, VEB Deutscher Verlag der Wissenschaften, Berlin 1974, Seiten 86-87, Kapitel 3.1.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein hitzehärtbares Überzugsmittel für die kathodische Elektrotauchlackierung, das durch Protonieren mit Säure wasserverdünnbar ist, enthaltend ein Polymerisations-, Polykondensations- oder Polyadditionsprodukt als Bindemittel und ein Gemisch von blockierten Polymethylenpolyphenylisocyanaten als Vernetzungsmittel.

Polymere Bindemittel mit freien OH- und/oder freien NH-Gruppen können mit isocyanatgruppenhaltigen Komponenten bei Temperaturen über 100°C vernetzt werden. Da Isocyanatgruppen schon bei tiefen Temperaturen reagieren, werden sie üblicherweise mit reaktiven, niedermolekularen Verbindungen verblockt. Als Blockierungsmittel können alle Arten von OH-, NH- und aciden CH-haltigen Verbindungen verwendet werden (siehe Progress Org. Coatings 9 (1981), S. 3-28).

Bei höheren Temperaturen spalten die Reaktionsprodukte unter Freisetzung der Isocyanatgruppen zurück; die Isocyanatgruppen können dann mit OH- und NH-haltigen Bindemitteln unter Vernetzung reagieren. Das Gleichgewicht wird dabei durch das Abdampfen der niedermolekularen Blockierungskomponente zugunsten der Vernetzung verschoben (Umurethanisierung).

Um den gefahrlosen Umgang mit Polyisocyanaten zu ermöglichen, wird in einer Vorstufe ein leichter Molekulargewichtsaufbau erzeugt. So kann man z.B. ein Diisocyanat in einer ersten Stufe mit einem Triol umsetzen; dabei entsteht bei geeignete Reaktionsführung ein trimerisiertes Isocyanat mit deutlich geringerem Dampfdruck und verringerter Hautresorption sowie einer zur Vernetzung günstigen Trifunktionalität. Diese Vorreaktion des Diisocyanats verteuert aber eine Produktion der Elektrotauchlacke im technischen Maßstab.

Die US-A 4.296.010 beschreibt Überzugsmittel aus einem Bindemittel und einem Vernetzungsmittel auf Basis von Diphenylmethan-4,4'-diisocyanat (MDI) oder eines Gemisches aus je etwa 50 % Diphenylmethan-4,4'-diisocyanat und Polymethylenpolyphenylisocyanat (Roh-MDI). Derartige Überzugsmittel ergeben zwar vergilbungsfreie Lackierungen, ihre Lagerstabilität ist aber nicht befriedigend, so daß sich nach einiger Zeit in der Dispersion des Überzugsmittels Ablagerungen bilden. Nach EP-A 236 050 tritt dieses Problem nicht mehr auf, wenn als Vernetzer ein blockiertes Polymethylenpolyphenylisocyanat verwendet wird, welches mehr als 5 % Diphenylmethan-2,4'-diisocyanat enthält. Das Isocyanatgemisch kann bis zu 75 %, vorzugsweise 10-50 % drei- und mehrkernige Polyisocyanate enthalten. Es hat sich nun gezeigt, daß auch bei solchen Elektrotauchlacken noch Ablagerungen im Bad auftreten.

Der Erfindung lag die Aufgabe zugrunde, Vernetzer für die kathodische Elektrotauchlackierung bereitzustellen, die

- einen hohen Gehalt an aromatischen Strukturen aufweisen, um guten Korrosionsschutz zu gewähren,
- trotz der aromatischen Strukturen keine Vergilbung weißer Decklacke bewirken,
- bei niedriger Einbrenntemperatur entkappen und dann hohe Reaktivität zeigen,
- trotz niedriger Entkappungstempertur stabile Lackformulierungen bzw. Elektrotauchbäder bilden,
- keine Kristallisationstendenz aufweisen, um Gelierung und Ablagerungen wirkungsvoll zu unterdrücken, und
- aus billigen, kommerziell verfügbaren Rohstoffen leicht und billig herzustellen sind.

Diese Aufgabe wird gelöst, wenn der Vernetzer ein Gemisch von blockierten Polymethylenpolyphenylisocyanaten ist, welches 5 bis 20 % Diphenylmethandiisocyanate enthält, einem Gehalt von weniger als 5% an Diphenylmethan-2,4'-diisocyanat und bei 25°C eine viskosität von 1500 bis 12000 mPas aufweist.

Gegenstand der Erfindung ist demzufolge ein hitzehärtbares Überzugsmittel für die kathodische Elektrotauchlackierung, das durch Protonieren mit Säure wasserverdünnbar ist, enthaltend

(A) 50 bis 95 Gew.-% eines Polymerisations-, Polykondensations- oder Polyadditionsproduktes mit primären und/oder sekundären Hydroxylgruppen und/oder primären, secondären und/oder tertiären Amino gruppen und
(B) 50 bis 5 Gew.-% eines blockierten Polymethylenpolyphenylisocyanats als Vernetzer, wobei der Vernetzer ein Gemisch von blockierten Polyisocyanaten der Formel

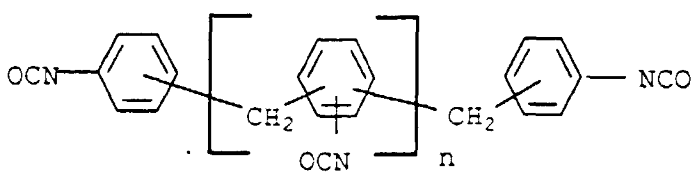

(I)

mit n = 0 bis 10 ist, welches 5 bis 20 % Diphenylmethandiisocyanate mit n=0 enthält, einen gehalt von weniger als 5% an Diphenylmethan-2,4'-diisocyanat und bei 25°C eine viskosität von 1500 bis 12000 mPas aufweist.

Das erfindungsgemäße Polyisocyanatgemisch enthält 5 bis 20, insbesondere 12 bis 18 % Diphenylmethandiisocyanate, wobei der Gehalt an Diphenylmethan-2,4'-diisocyanat weniger als 5, insbesondere weniger als 2 % beträgt. Die Viskosität der Polyisocyanatmischung bei 25°C beträgt vorzugsweise 2500 bis 8000, insbesondere 3500 bis 6000 mPa.s. Weitere Ausführungsformen der Erfindung werden in den Ansprüchen 2 bis 5 angegeben.

Das Polyisocyanatgemisch mit 5 bis 20 % Diphenylmethandiisocyanaten kann hergestellt werden durch Destillation von Roh-MDI, wobei bevorzugt das Diphenylmethan-4,4'-diisocyanat abdestilliert und die höhermolekularen Bestandteile angereichert werden. Der Gehalt der Isocyanatmischung an Diphenylmethandiisocyanaten kann auf bekannte Weise, z.B. durch Säulenchromatographie oder nach der HPLC-Methode bestimmt werden.

Das erfindungsgemäße Polyisocyanat-Gemisch -Gemisch ist schon ohne Trimerisierung polyfunktionell, d. h., bei richtiger Wahl der Mischung ist die Funktionalität größer als 3,0. Damit kann die Vorstufe der Trimerisierung entfallen; die Produktionskosten werden vermindert.

Die Polyisocyanate der Struktur (I) reagieren mit allen den Fachmann bekannten Verblockungskomponenten, so daß eine breite Palette der unterschiedlichsten Vernetzer synthetisiert werden kann. So können mit Alkoholen Vernetzer mit Entkappungstemperaturen um 160°C hergestellt werden; mit Aminen werden verkappte Vernetzer für eine Einbrenntemperatur um 130°C erhalten.

Die Polyisocyanate sind auch bei tiefen Temperaturen flüssig und zeigen keine Tendenz zur Kristallisation. Auch ihre Umsetzungsprodukte mit den Verkappungskomponenten sind stabil und erlauben die Formulierung nichtgelierender Lacke und stabiler Elektrotauchbäder.

Die Vernetzer geben auch bei hohen Einbrenntemperaturen keine Vergilbung weißer Decklacke.

Die Vernetzer benötigen zu ihrer Synthese deutlich weniger Lösemittel als dem Stand der Technik entspricht. Damit kann der Lösemittelgehalt der damit formulierten Lacke erniedrigt werden.

Durch partielle Verkappung mit tertiären Aminen und deren nachfolgende Quarternierung können Vernetzerdispersionen mit hoher Stabilität hergestellt werden.

Im Elektrotauchbad liegen die Polyisocyanate in blockierter Form vor. Dazu wird das Polyisocyanat-Gemisch mit der auf den Isocyanatgehalt berechneten stöchiometrischen Menge an Blockierungsmittel umgesetzt. Die Reaktionstemperaturen liegen je nach der Verkappungskomponente zwischen 20 und 60°C. Die Reaktionszeiten betragen zwei bis drei Stunden bis ein Restisocyanatwert von 0 erreicht ist.

Die Reaktion kann je nach dem Typ des Blockierungsmittels mit gewissen Anteilen Lösemittel gefahren werden; günstig ist die lösemittelfreie Variante. Es empfiehlt sich, gegen Ende der Reaktion geringe Mengen eines niedermolekularen Alkohols zuzufügen.

Geeignete Blockierungsmittel sind:

- Alkohole: primäre, sekundäre, tertiäre; vorzugsweise Alkylenglykolmonoether oder Polyalkylenglykolmonoether;
- Amine: primäre und sekundäre; einseitig disubstituierte $\alpha$, $\omega$-Diamine; Alkoxiamine; Trishydroxyalkylamine; vorzugsweise aliphatische Amine;
- Oxime,
- Hydroxiimide;
- heterocyclische Verbindungen wie Triazole, Imidazole und Imidazoline;
- Lactame;
- Phenole;
- aktive Methylenderivate wie Acetessigester, Malonsäure, Enamine;

Besonders bevorzugt sind:
Ethylenglykolmonopropylether (PG),
Diethylenglykolmonobutylether (BDG),
Diethylenglykolmonohexylether,
Triethylenglykolmonomethylether,
Dipropylenglykolmonoisopropylether,
Dibutylamin,
Diallylamin,
N-Ethyl-N-phenyl-amin,
Di-[2-methoxiethyl]-amin
N,N-Dimethylpropylendiamin-1,3,
Methylethanolamin, Diethanolamin
Methylethylketoxim,

3,4-Dimethylphenol.

Als Komponente (A) werden auf diesem technischen Gebiet bekannte primäre und/oder sekundäre Hydroxylgruppen und/oder primäre, sekundäre und/oder tertiäre Aminogruppen enthaltende Kunstharz-Bindemittel, vorzugsweise mit einer mittleren Molmasse $\overline{M}_n$ von 500 bis 20 000, wie Amino-Epoxidharze, Amino-Poly(meth)acrylatharze und/oder Amino-Polyurethanharze mit einer Aminzahl von 30 bis 150, verwendet. Der Einsatz von Amino-Epoxidharzen wird für Grundierungen mit hohem Korrosionsschutzniveau bevorzugt. Das Kunstharzbindemittel enthält mindestens eine Aminogruppe pro Molekül. Die untere Grenze der Aminzahl sollte bei 45, bevorzugt bei 70, die obere Grenze sollte bei 120, bevorzugt bei 100, liegen. Beispiele für Amino-Epoxidyharze sind Umsetzungsprodukte von epoxidgruppenhaltigen Harzen mit vorzugsweise endständigen Epoxidgruppen mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Mono- oder Dialkylaminogruppe und/oder durch eine primäre Aminogruppe, die durch Ketiminisierung vorübergehend geschützt wird, modifiziert sein.

Als Epoxidharze können beliebige Materialien verwendet werden, sofern sie ein mittleres Molekulargewicht von 300 bis 60000 und im Mittel 1,0 bis 3,0 Epoxidgruppen pro Mol enthalten, vorzugsweise Verbindungen mit zwei Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens zwei phenolische Hydroxylgruppen im Molekül enthaltenden Polyphenolen, die sich in üblicher Weise durch Veretherung mit einem Epihalohydrin in Gegenwart von Alkali herstellen lassen. Aromatische Polyepoxide mit einem höheren Epoxidäquivalentgewicht können aus solchen mit einem niedrigeren Epoxidäquivalentgewicht und Polyphenolen hergestellt werden.

Das Einführen von Aminogruppen kann in einer der üblichen Reaktionen erfolgen, wie sie dem Fachmann geläufig sind und beispielsweise in EP 134 983, EP 165 556 oder EP 166 314 beschrieben sind.

Außer den bisher erwähnten Komponenten können weitere Stoffe wie Pigmente, Lackhilfsmittel, Lösemittel und Härterkatalysatoren zugesetzt werden. Die so hergestellten Überzugsmittel können auch durch übliche Methoden auf Substrate wie Holz, Kunststoff oder Metall aufgebracht werden. Für die kathodische Elektrotauchlackierung wird das Kunstharz in Verbindung mit den genannten Zusatzstoffen durch Protonieren mit Säure in eine wasserlösliche Form überführt. Als Säuren werden bevorzugt Carbonsäuren wie Ameisensäure, Essigsäure oder Milchsäure verwendet, aber auch anorganische Säuren wie z.B. Phosphorsäure können eingesetzt werden. Anschließend wird zu dieser Dispersion eine Dispersion des Vernetzers in dem gewünschten Verhältsnis zugemischt. Es ist natürlich auch möglich, dem Vernetzer die genannten Zusatzstoffe zuzugeben und anschließend zu dispergieren.

Für die kathodische Elektrotauchlackierung wird im allgemeinen ein Feststoffgehalt des Elektrotauchbades von 5 bis 30 Gew.-% eingestellt.

Die Abscheidung erfolgt üblicherweise bei Temperaturen zwischen 15 und 40°C während einer Zeit von 0,5 bis min und bei pH-Werten zwischen 4,0 und 8,5, bevorzugt um den Neutralpunkt, bei Spannungen zwischen 50 und 500 V. Der zu beschichtende elektrisch leitende Körper wird dabei als Kathode geschaltet. Der abgeschiedene Film wird nach einer Spülung bei Temperaturen oberhalb 100°C (Objekttemperatur) 20 min gehärtet.

Beispiele

Herstellung der Bindemittel-Dispersion A

1805 g eines flüssigen Epoxidharzes mit einem Epoxidäquivalentgewicht von 188 werden in einem 5l-Rührkolben mit 450 g p-Nonylphenol, 63 g Xylol und 7 g Dimethylbenzylamin gemischt und auf 130°C erhitzt. Wenn ein Epoxidäquivalentgewicht von 460 erreicht ist, werden 440 g Xylol zugefahren; danach wird auf 80°C abgekühlt. Eine Mischung aus 126 g Diethanolamin und 90 g N-Methylethanolamin wird tropfenweise zudosiert. Nach einer Stunde Rührzeit bei 80°C werden weitere 73 g Ethanolamin tropfenweise zugegeben. Nach zwei Stunden Rühren bei 80°C wird mit 127 g Hexylglykol verdünnt. Der Feststoffgehalt beträgt 80 %, das Molekulargewicht $\overline{M}_n$ 3025 (gemessen durch Gelpermeationschromatographie) bei einer Polydispersität von 1,65.

Herstellung der Vernetzerdispersion B

Verwendet wird ein Polyisocyanatgemisch aus 14,9 % Diphenylmethan-4,4'-diisocyanat, 1,0 % Diphenylmethan-2,4'-diisocyanat, 84,1 % drei- und mehrkernige Polyisocyanate mit einer Viskosität bei 25°C von 7070 mPa.s und einem Isocyanatwert von 30,6 %. 343 g dieses Polyisocyanatgemisches werden in 169 g Methylethylketon gelöst. Innerhalb einer halben Stunde werden bei Raumtemperatur 332,5 g Di-[2-methoxiethyl]-amin zugefahren. Die Temperatur steigt zwischenzeitlich auf 56°C. Nach 20 minütigem Rühren weren 195 g Isobutanol zudosiert; danach wird abgekühlt. Der Feststoffgehalt beträgt 63,1 %. Die 55%ige Lösung in 1-Methoxypropanol-2 (Solvenon PM) hat bei 25°C eine Viskosität von 102 mPas.

Herstellung der Pigmentpaste

Man mischt 660,8 g Epoxidharz EPON 828 (Fa. SHELL), 260,6 g Bisphenol A und 61,5 g Dodecylphenol und erhitzt auf 110°C, bis sich eine klare Lösung gebildet hat. Dann setzt man 0,98 g Ethyltriphenylphosphoniumjodid zu, wonach die Temperatur auf 150°C steigt. Nach dem Abklingen der exothermen Reaktion hält man die Mischung 90 min lang bei 130°C. Anschließend wird mit 513,5 g 2-Butoxyethanol verdünnt und auf 80°C gekühlt, dann werden binnen 30 min 244,2 g Thiodiethanol (50 % aktiv) zugetropft. Anschließend werden 134,1 g Dimethylolpropionsäure und 30,6 g Wasser zugesetzt. 98 g dieses Harzes werden mit 175 g Titandioxid, 8 g Bleisilikat, 35 g Aluminiumsilikat, 11 g Dibutylzinnoxid, 315 g Perlruß und 169,5 g Wasser zu einer Paste angerührt.

Herstellung des Elektrotauchbads:

508,2 g des Bindemittels A werden mit 68 g Polypropylenglykolphenylether und 273,6 g Vernetzer B gemischt, dann werden 15 g Eisessig und 593 g Wasser zugesetzt. 590 g des Wasser/Lösemittelgemisches werden bei 45°C unter Vakuum abdestilliert, gleichzeitig werden weitere 975 g Wasser zugegeben. Es entsteht eine wäßrige Sekundärdispersion mit einem Feststoff-Gehalt von 30 %. Das Bad ist länger als 6 Wochen stabil, es trieb keine Abscheidung oder Kristallisation auf.

Elektrotauchlackierung

Mit dem beschriebenen Bad wird ein phosphatiertes Stahlblech beschichtet. Die Abscheidespannung beträgt 360 Volt, die Abrißspannung 380 Volt. Es bildet sich ein 22,5 µm dicker Film, der bei 140°C zu einem Überzug eingebrannt werden kann, der keine Vergilbung zeigt.

## Patentansprüche

1. Hitzehärtbare, durch Protonieren mit Säure wasserverdünnbare Überzugsmittel, enthaltend

   (A) 50 bis 95 Gew.-% eines Polymerisations-, Polykondensations- oder Polyadditionsproduktes mit primären und/oder sekundären Hydroxylgruppen und/oder primären, sekundären und/oder tertiären Aminogruppen und

   (B) 50 bis 5 Gew.-% eines blockierten Polyisocyanates als Vernetzer,

   dadurch gekennzeichnet, daß das Polyisocyanat ein Gemisch aus Polyisocyanaten der Formel

   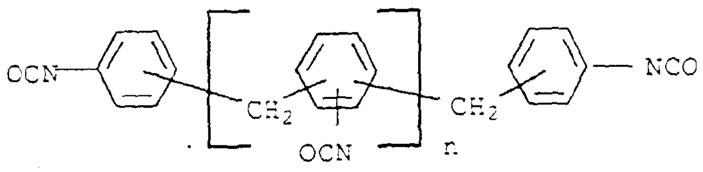

   (I)

   mit n = 0 bis 10 ist, welches 5 bis 20 % Diphenylmethandiisocyanate mit n = 0 enthält, einen Gehalt von weniger als 5 % an Diphenylmethan-2,4'-diisocyanat und bei 25 °C eine Viskosität von 1500 bis 12000 mPa s aufweist.

2. Überzugsmittel nach Anspruch 1, dadurch gekennzeichnet, daß das Polyisocyanatgemisch mit einem Alkohol, einem Amin oder einem Oxim oder Gemischen davon blockiert ist.

3. Überzugsmittel nach Anspruch 2, dadurch gekennzeichnet, daß das Polyisocyanatgemisch mit Diethylenglykolmonobutylether, Dibutylamin, Methylethylketoxim, Diallylamin oder mit Gemischen davon blockiert ist.

4. Verwendung von Überzugsmitteln nach einem der Ansprüche 1 bis 3 für die kathodische Elektrotauchlackierung elektrisch leitfähiger Substrate.

5. Beschichteter Gegenstand, erhältlich unter Verwendung eines Überzugsmittels gemäß eines der Ansprüche 1 bis 3.

**Claims**

1. A heat curable coating composition which is water thinnable on protonation with an acid and comprises

(A) from 50 to 95 % by weight of a chain or step growth polymerization product having primary and/or secondary hydroxyl groups and/or primary, secondary and/or tertiary amino groups and
(B) from 50 to 5 % by weight of a blocked polyisocyanate as crosslinker,

characterized in that the polyisocyanate comprises a mixture of polyisocyanates of the formula

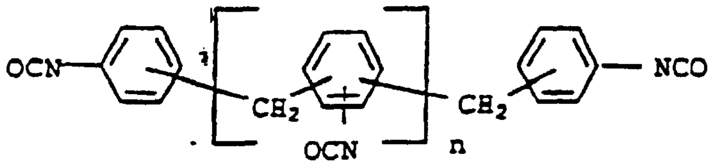

(I)

where n is from 0 to 10, but contains from 5 to 20 % of diphenylmethane diisocyanates where n=0, has a content of less than 5 % of diphenylmethane 2,4'-diisocyanate and has a viscosity at 25°C of from 1500 to 12,000 mPa s.

2. A coating composition as claimed in claim 1, characterized in that the polyisocyanate mixture has been blocked with an alcohol, an amine or an oxime or a mixture thereof.

3. A coating composition as claimed in claim 2, characterized in that the polyisocyanate mixture has been blocked with a diethylene glycol monobutyl ether, dibutylamine, methyl ethyl ketoxime, diallylamine or a mixture thereof.

4. The use of coating compositions of any one of claims 1 to 3 for the cathodic electrocoating of electroconductive substrates.

5. A coated article obtainable using a coating composition as claimed in any of claims 1 to 3.

**Revendications**

1. Composition de revêtement thermodurcissable, diluable à l'eau par protonation avec un acide, comprenant

(A) de 50 à 95% en poids d'un produit de polymérisation, de polycondensation ou de polyaddition ayant des groupes hydroxy primaires et/ou secondaires et/ou des groupes amino primaires, secondaires et/ou tertiaires et
(B) de 50 à 5% en poids d'un polyisocyanate bloqué en tant qu'agent de réticulation,

caractérisée en ce que le polyisocyanate est un mélange de polyisocyanates de formule

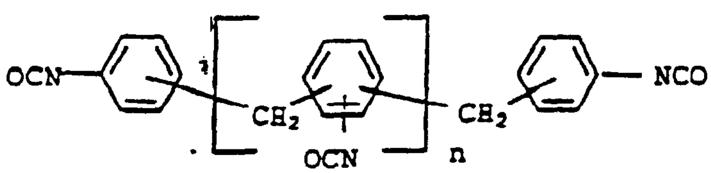

(I)

avec n = 0 à 10, qui comprend de 5 à 20% de diisocyanates de diphénylméthane avec n = 0, présente une teneur en 2,4'-diisocyanate de diphénylméthane inférieure à 5% et une viscosité de 1 500 à 12 000 mPa.s à 25°C.

2. Composition de revêtement selon la revendication 1, caractérisée en ce que le mélange de polyisocyanates est bloqué avec un alcool, une amine ou un oxime ou des mélanges de ceux-ci.

3. Composition de revêtement selon la revendication 2, caractérisée en ce que le mélange de polyisocyanates est bloqué avec l'éther monobutylique de diéthylèneglycol, la dibutylamine, le méthyléthylcétoxime, la diallylamine ou avec des mélanges de ceux-ci.

4. Utilisation de compositions de revêtement selon l'une quelconque des revendications 1 à 3 pour le revêtement électrophorétique cathodique de substrats électroconducteurs.

5. Article revêtu pouvant être obtenu en utilisant une composition de revêtement selon l'une quelconque des revendications 1 à 3.